# EUROPÄISCHE PATENTANMELDUNG

(11) **EP 1 231 552 A1**
(43) Veröffentlichungstag der Anmeldung: **14.08.2002**
(21) Anmeldenummer: 02008116.2
(22) Anmeldetag: 19.08.1999
(51) Int. Cl.: G06F 17/50, G06F 17/60

(54) **Verfahren und System zur Anzeige und Konfiguration von Bauelement- und Prozessstrukturen**

(30) Priorität: 21.08.1998 US 138147
(62) Teilanmeldung aus: 99947267.3
(71) Anmelder: SAP Aktiengesellschaft, 69190 Walldorf (DE)
(72) Erfinder: Mühleck, Peter, 69207 Sandhausen (DE); Polly, Adam, 76297 Stutensee-Blankenloch (DE)

(57) **Zusammenfassung**

Ein computergestütztes System wird bereitgestellt, das in der Lage ist, Bauelemente- und Prozessstrukturen für konfigurierbare Produktklassen anzuzeigen, die in einer Datenstruktur gespeichert sind. Produktklassen in der Datenstruktur werden durch Produktknoten dargestellt. Bauelemente, die Abstraktionen konkreter Artikel sind, die in dem Produkt verwendet werden, werden durch Bauelementeknoten dargestellt. Bauelementeknoten werden auf jede Produktklasse abgebildet, der das Bauelement zugeordnet ist, und werden einer oder mehreren Bauelementevarianten zugeordnet, bei denen es sich um konkrete, bei der Herstellung einer bestimmten Produktvariante verwendete Artikel handelt. Prozessknoten, die Abstraktionen tatsächlicher Schritte sind, die zur Herstellung einer Produktvariante erforderlich sind, die als Prozessvarianten bekannt sind, werden durch Prozessknoten dargestellt. Beim Empfang einer Auswahl für eine bestimmte Produktklasse setzt das computergestützte System alle Bauelemente- und Prozessknoten, die dieser Produktklasse zugeordnet sind, um und kann diese zum Beispiel graphisch darstellen. Als Alternative kann das System die Eingabe einer Produktvariante empfangen und alle Bauelementevarianten anzeigen, die bei deren Herstellung verwendet werden, wobei es sich um seine Materialliste handelt.

## Beschreibung

Die vorliegende Erfindung betrifft ein computergestütztes System und Verfahren zur Anzeige von Bauelement- und Prozessstrukturen für konfigurierbare Produktklassen, die in einer Datenstruktur gespeichert werden.

Viele Industrieunternehmen bieten ihren Kunden zu einem hohen Grad variante Produkte an, z. B. die Automobilindustrie. Automobilhersteller bieten ihren Kunden in der Regel mehrere Modelle an, wobei der Kunde häufig zwischen zahlreichen Optionen für ein gewähltes Modell wählen kann. Als Folge muss der Hersteller eine Vielzahl von Produkten und ihre entsprechenden Bauelementestrukturen und diesbezügliche Produktionsvorgänge mitverfolgen.
Herstellungsunternehmen, die eine große Produktvarianz anbieten und bei vernünftigen Kosten bleiben wollen, sind auf ein effizientes Informationssystem für Produkte und ihre zugeordneten Bauelemente und Prozesse angewiesen.

Bestehende Datenbanksysteme für Produktstrukturen neigen zur Redundanz. Zum Beispiel kann eine Datenbasis Bauelementelisten für hunderte verschiedener Produkte enthalten, was dazu führt, dass identische Bauelemente separat für jedes Produkt aufgelistet werden, dem sie zugeordnet sind. Obwohl ein solches System nützlich für die Herstellung der Produkte sein kann, ist es vom Entwicklungsstandpunkt aus gesehen unpraktisch. Ein Entwickler kann nicht ohne weiteres zum Beispiel die Anzahl der von einer Veränderung eines bestimmten Bauelements betroffenen Produkte oder Produktklassen übersehen. Ebenso ist es schwierig, ohne weiteres ein klares Bild davon zu gewinnen, welche Bauelemente bestimmten Produktklassen gemeinsam sind und welche nur für ein bestimmtes Produkt in einer Klasse spezifisch sind. Genauso wenig kann der Entwickler den Weg eines bestimmten Produkts und seiner Bauelemente durch die Produktionsprozesse überschauen. Dieses sind von einem Kostenstandpunkt aus gesehen wichtige Merkmale, da sie einem Entwickler auf der Grundlage der Anzahl von Produkten oder Produktklassen, die betroffen sind, Entscheidungen ermöglichen, ob bestimmte Bauelemente hinzugefügt oder verändert werden sollen. Eine genaue Übersicht über die Bauelemente und Prozesse, die Produktklassen zugeordnet sind, ist entscheidend für einen effizienten Entwurf und Herstellung.

Ein System zur Abbildung von Produkten und ihrer zugeordneten Bauelemente wurde während der CIMData European Conference von 1997 beschrieben. Das System enthält eine Datenstruktur mit einer baumartigen Darstellung der verschiedenen Bauelemente und Unterbauelemente für ein einzelnes Modell eines Automobils. Jedes Bauelement wird durch einen Knoten dargestellt und ist spezifischen Varianten, wie zum Beispiel "Leder" und "Vinyl" für das Bauelement "Sitz" zugeordnet. Die Struktur ist jedoch auf eine einzelne Produktklasse beschränkt, und die Bauelemente werden auf höchstens eine Produktklasse abgebildet. Deshalb ermöglicht das System keine alternative Ansicht von Bauelementen, die allgemeinen Produktklassen und bestimmten Produkten zugeordneten Bauelementen zugeordnet sind, was sowohl vom Entwicklungs- als auch Produktionsstandpunkt aus gesehen wünschenswert wäre.

Ein weiteres Beispiel eines bekannten Systems zur Abbildung einer ähnlichen Struktur ist das STEP-Protocol ISO 10303-214. Obwohl dieses System die Prozesse sowie die Bauelemente für eine bestimmte Produktklasse abbildet, unterscheidet es nicht zwischen den eigentlichen Produktionsschritten, die für einen allgemeinen Prozess erforderlich sind, und den für spezifische Prozesse erforderlichen Schritten. Dementsprechend kann dieses System die eigentlichen Produktionsschritte, die für die Herstellung einer bestimmten Produktvariante erforderlich sind, nicht genau unterstützen oder darstellen. Weder ermöglicht STEP eine Darstellung von Bauelementen und Prozessen, die verschiedenen Produktklassen zugeordnet sind, noch ist die Zerlegung eines bestimmten Bauelements gemäß mehr als einer Variante möglich.

Es wäre wünschenswert, über ein computergestütztes System zu verfügen, wodurch einzelne Produktbauelemente auf alle Produktklassen abgebildet werden, mit denen das Bauelement zusammenhängt, und alle Bauelemente einer bestimmten Produktklasse in einem graphischen Format darzustellen. Spezifische Bauelementevarianten, die das für eine bestimmte Produktvariante verwendete konkrete Element darstellen, sollten ebenfalls jedem Bauelement zugeordnet werden können. Ähnlich würden die zur Montage von Bauelementen erforderlichen Prozesse auf diese Bauelemente abgebildet, und spezifische Varianten dieser Prozesse oder die eigentlichen Produktionsschritte, die bestimmten Bauelementevarianten zugeordnet sind, jedem Prozess zugeordnet. Das computergestützte System würde eine Ansicht aller Bauelemente und Prozesse ermöglichen, die einer beliebigen Produktklasse in der Produktklassenhierarchie auf einer Anzeige zugeordnet sind.

Dementsprechend ist eine Aufgabe der Erfindung die Bereitstellung eines computergestützten Systems mit einer im Speicher gespeicherten Datenstruktur, wodurch Produkte in der Datenstruktur gruppiert werden.

Eine weitere Aufgabe der Erfindung ist die Bereitstellung von Bauelementeknoten und Prozessknoten in der Datenstruktur, die einzelne Bauelemente und Prozesse darstellen, die in der Datenstruktur verwendet werden.

Eine weitere Aufgabe der Erfindung ist die Bereitstellung von Bauelementevarianten für einzelne Bauelementeknoten in der Datenstruktur, die den Umfang und Verwendungsmöglichkeiten konkreter Artikel, die für dieses Bauelement verwendet werden, und ihre Mengen darstellen.

Eine weitere Aufgabe der Erfindung ist die Bereitstellung von Prozessvarianten für jeden Prozessknoten in der Datenstruktur, die den Umfang von Produktionsschritten darstellen, die für diesen Prozess verwendet werden.

Eine weitere Aufgabe der Erfindung ist die Bereitstellung eines Auswahlzustands in der Datenstruktur, der die bestimmte Bauelementevariante und Prozessvariante angibt, die für eine bestimmte Produktvariante gemäß den spezifischen Produktkenngrößen der Produktvariante verwendet werden sollen.

Eine weitere Aufgabe der Erfindung ist die Unterstützung mehr als einer möglichen Zerlegung für ein bestimmtes Bauelement in der Datenstruktur.

Eine weitere Aufgabe der Erfindung ist die Ermöglichung einer graphischen Ansicht auf einer Sichtanzeige für alle Bauelemente, die einer Produktklasse zugeordnet sind.

Eine weitere Aufgabe der Erfindung ist die Ermöglichung einer graphischen Ansicht aller Prozesse, die Bauelementen in einer Produktklasse zugeordnet sind, auf einer Sichtanzeige.

Eine weitere Aufgabe der Erfindung ist die Ermöglichung einer graphischen Ansicht aller Bauelemente für eine spezifische Produktvariante auf einer Sichtanzeige.

Zur Lösung dieser Aufgaben wird ein computergestütztes System mit einem Speicher ausgestattet, der eine Produktvariantendatenstruktur enthält, wobei Produkte hierarchisch nach Klassen gruppiert sind. Bauelemente werden auf alle einzelnen Produktklassen abgebildet, denen sie zugeordnet sind. Herstellungsprozesse werden auf alle einzelnen Bauelemente abgebildet, denen sie zugeordnet sind. Die Bauelementevarianten und Prozessvarianten, welche die spezifischen konkreten Artikel und Produktionsschritte zur Herstellung eines bestimmten Produkts darstellen, werden jedem Bauelement bzw. Prozess zugeordnet. Produktklassen und Unterklassen werden graphisch auf einer Sichtanzeige in einer Baumstruktur mit ihren zugeordneten Bauelementen, Bauelementevarianten und/oder Prozessvarianten angezeigt.

Bauelemente, d.h. Abstraktionen konkreter Artikel, die in dem Produkt verwendet werden, werden durch Bauelementeknoten dargestellt. Jeder Bauelementeknoten ist einer bestimmten Produktklasse und einer oder mehreren Bauelementevarianten zugeordnet, die den Umfang konkreter Artikel darstellen, die in dem Produkt für dieses Bauelement verwendet werden. Zum Beispiel enthält das Bauelement "Rad" die Bauelemente "Reifen" und "Felge". Spezifische Bauelementevarianten für "Felge" können Aluminiumfelge, Stahlfelgenart A und Stahlfelgenart B umfassen. Bauelementevarianten besitzen einen Auswahlzustand, der die entsprechenden Bauelementevarianten für ein spezifisches Produkt oder "Produktvariante" in der betreffenden Produktklasse auswählt. Die Menge aller ausgewählten Bauelementevarianten bildet die Materialliste für diese bestimmte Produktvariante.

Prozesse, bei denen es sich um Abstraktionen tatsächlicher, in dem Produktionsprozess verwendeter Schritte handelt, werden durch Prozessknoten dargestellt. Jeder Prozessknoten ist im allgemeinen mindestens einem Bauelement und einer oder mehreren Prozessvarianten zugeordnet, wobei es sich um die tatsächlichen Produktionsschritte handelt, die für bestimmte Varianten des betroffenen Bauelements bzw. der betroffenen Bauelemente benutzt werden. Zum Beispiel kann der verallgemeinerte Prozess "Türmontage" eine erste Prozessvariante enthalten, die die tatsächlichen Produktionsschritte darstellt, die zur Montage einer normalen Tür notwendig sind, und eine zweite Prozessvariante, die die verschiedenen Produktionsschritte darstellt, die zur Montage einer Tür notwendig sind, die zum Beispiel mit einem automatischen Hebemechanismus ausgestattet ist.

Die Erfindung weiterbildende Merkmale sind in den Patentansprüchen angegeben. Die Erfindung wird im folgenden anhand von in Figuren dargestellten Ausführungsbeispielen näher erläutert.

### Es zeigen:

FIG. 1: den vierschichtigen Ansatz der Produktvariantendatenstruktur des computergestützten Systems,
FIG. 2: ein Beispiel der Anwendungsansicht "Technik" an der Produktfamilie "Transportkraftfahrzeug" in der Datenstruktur,
FIG. 3: ein Beispiel für die Anwendungsansicht "Materialanforderungsplanung" an der Produktklasse "Mountain-Bike" in der Datenstruktur,
FIG. 4: ein Beispiel für die Anwendungsansicht "Produktion und Prozessplanung (Weglenkung)", die dem Prozess "Türmontage" in der Datenstruktur zugeordnet ist,
FIG. 5: ein Flussdiagramm des Verfahrens zur Anzeige einer graphischen Darstellung eines Anwendungsansichtsknotens,
FIG. 6: ein Flussdiagramm des Verfahrens zur Anzeige der Materialliste für eine bestimmte Produktvariante,
FIG. 7: die Zerlegung einer Produktklasse in schmalere Produktklassen in der Datenstruktur,
FIG. 8: Bauelementevarianten eines Bauelementeknotens in Bezug auf eine Produktklasse in der Datenstruktur,
FIG. 9: ein Beispiel der alternativen Zerlegung eines Bauelements in der Datenstruktur und
FIG. 10: eine Zusammenfassung der Artikel der Produktvariantendatenstruktur in einem Datenmodell gemäß EXPRESS-G (ISO 10303-11).

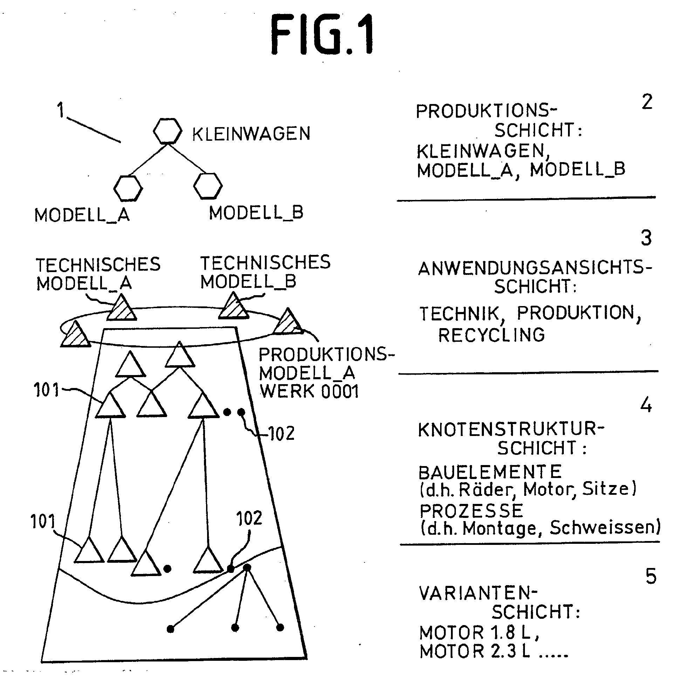

Die Produktvariantendatenstruktur 1 des computergestützten Systems ist, wie in FIG.1 gezeigt, in vier Schichten aufgeteilt: die Produktschicht 2, die Anwendungsansichtsschicht 3, die Knotenstrukturschicht 4 und die Variantenschicht 5. Die oberste Schicht ist die Produktschicht 2, die aus einer Beschreibung von Produkten und Produktfamilien jeweils mit bestimmten Kenngrößen besteht. Diese Schicht kann hierarchisch strukturiert werden, um die Beziehung zwischen Produktfamilien zu zeigen. Zum Beispiel kann die Produktklasse "Kleinwagen" wie gezeigt aus den Unterklassen "Modell A" und "Modell B" bestehen.

Die nächste Schicht, die Anwendungsansichtsschicht 3, ermöglicht die Ansicht einer bestimmten Produktklasse auf verschiedene Weisen, abhängig von Abteilungsanforderungen. Die Technik muss zum Beispiel alle Bauelementeknoten der obersten Schicht sehen, die einer generischen Produktklasse zugeordnet sind.

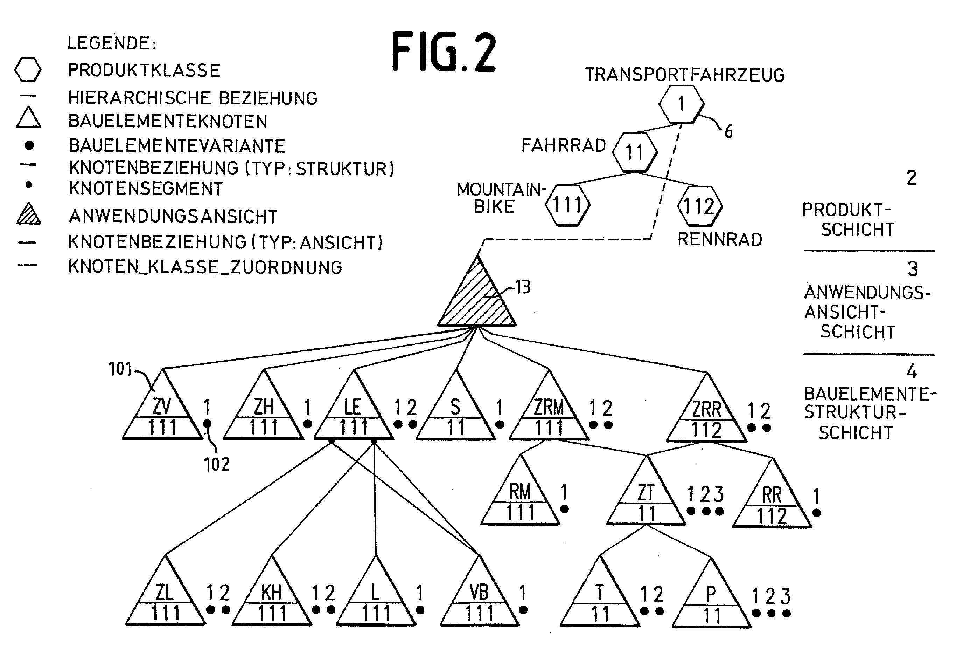

FIG.2 zeigt die Anwendungsansicht "Technik" 13, bei der es sich um eine Ansammlung aller Bauelementeknoten 101 der obersten Schicht handelt, die "Transportfahrzeug" oder beliebigen ihrer Unterklassen "Fahrrad", "Mountain-Bike" oder "Rennrad" zugeordnet sind. Ähnlich kann die Materialanforderungsplanung eine Ansicht aller Bauelementeknoten erfordern, die bei der Produktion einer spezifischeren Produktklasse verwendet werden.

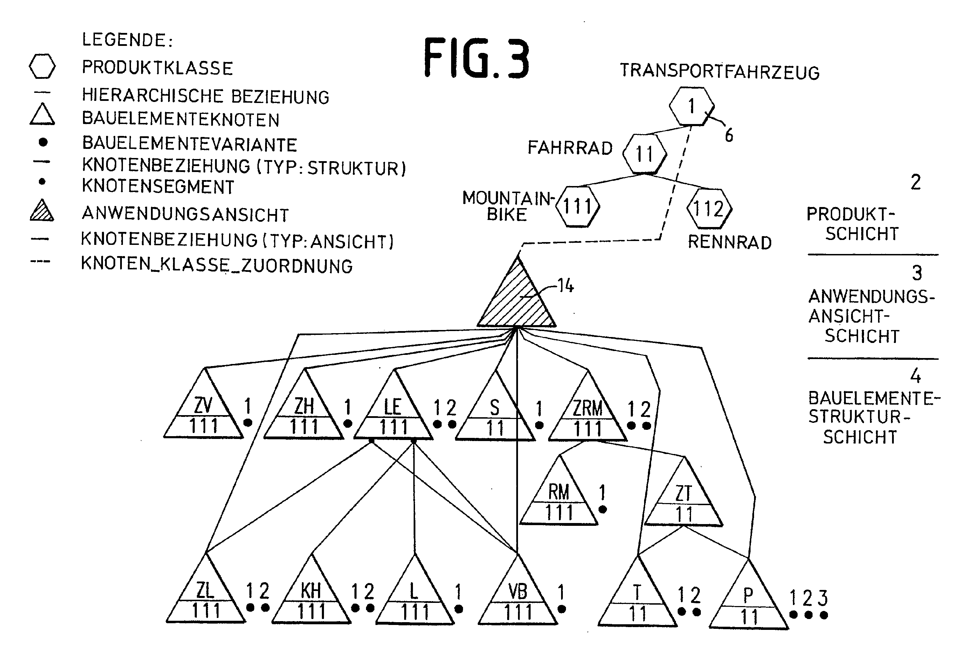

FIG.3 zeigt die Anwendungsansicht "Produktion" 14, die alle Bauelementeknoten 101 abbildet, die bei der Produktion der spezifischeren Produktklasse "Mountain-Bike" verwendet werden. Die Produktionsplanung kann dagegen eine Ansicht des Weges eines bestimmten Produkts durch seine Produktionsschritte benötigen, und müsste somit alle Prozessknoten sehen, die einer bestimmten Produktklasse zugeordnet sind, sowie alle Bauelementeknoten, die diesen Prozessknoten zugeordnet sind.

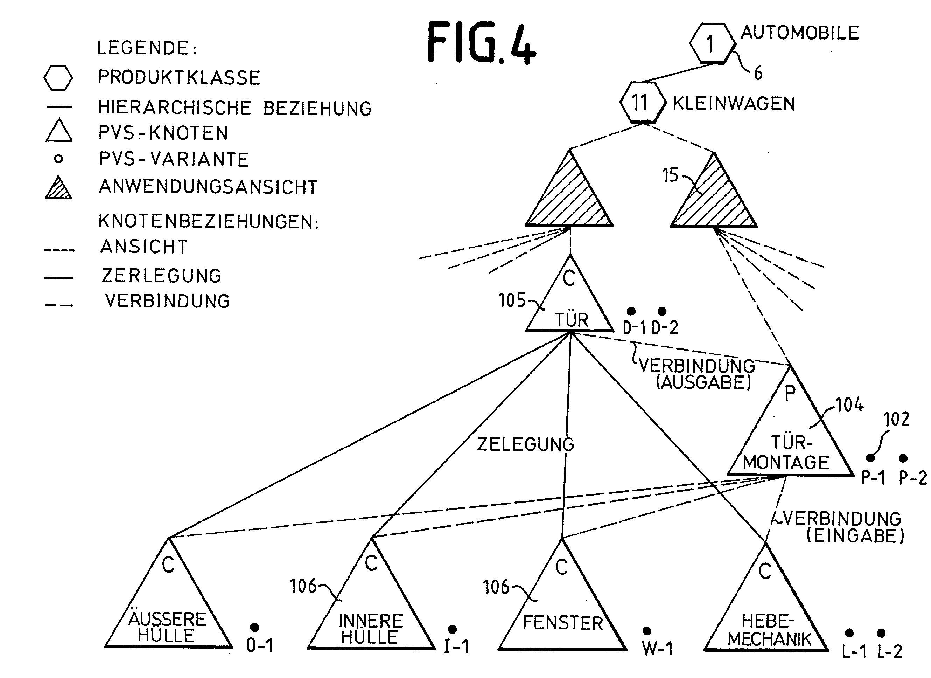

FIG.4 zeigt die Anwendungsansicht "Produktion und Prozessplanung (Weglenkung)" 15, die die Integration der Produktzerlegung und Prozessoperationen abbildet. Spezifisch ist der Prozessknoten "Türmontage" 104 mit dem Bauelementeknoten "Tür" 105 und den Knoten 106 verbunden, die seine Unterbauelemente darstellen. Die Anwendungsansichtsschicht 2 speichert vorzugsweise verschiedene Ansichten von Abteilungen in der Firma. Bei Angabe durch die Benutzerschnittstelle des gewünschten Anwendungsansichtsknotens setzt der Zentralprozessor des computergestützten Systems die Anwendungsansicht in eine graphische Darstellung zur visuellen Anzeige auf der Anzeige des computergestützten Systems um.

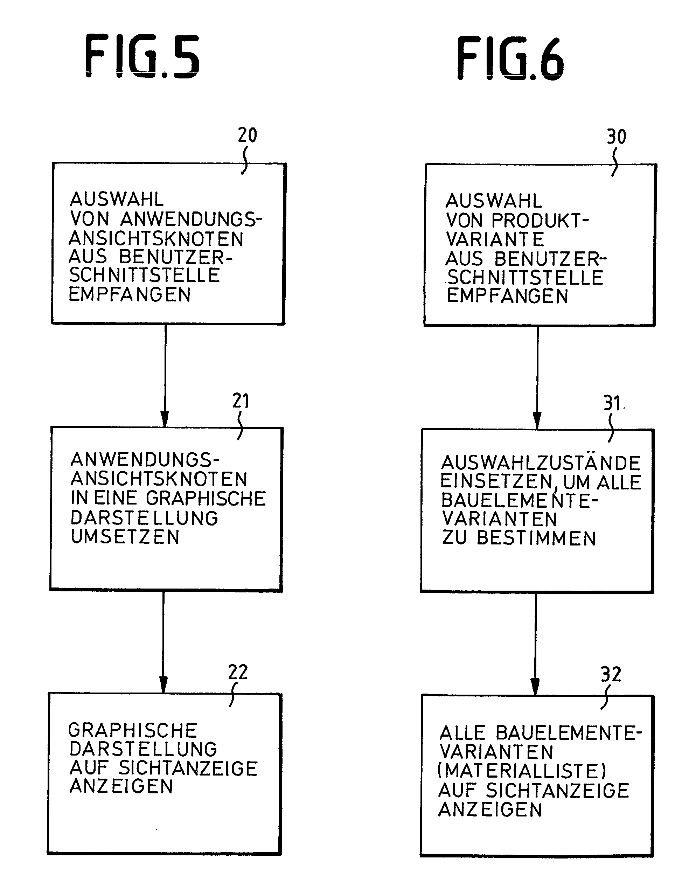

FIG.5 ist ein Flussdiagramm der Folge des Empfangs des Anwendungsansichtsknotens aus der Benutzerschnittstelle 20, des Umsetzens des Anwendungsansichtsknotens in eine graphische Darstellung 21 und der Anzeige der graphischen Darstellung auf einer Sichtanzeige 22. Die Benutzerschnittstelle, der Zentralprozessor und die Anzeige des Systems R/3 eignen sich u.a. zum Empfangen der Eingabe des gewünschten Anwendungsansichtsknotens, dessen Umsetzung in eine graphische Darstellung zur visuellen Anzeige und zur Anzeige der graphischen Darstellung.

Die Knotenstrukturschicht 4 stellt die funktionale Zerlegung des Produkts in Bauelemente und Prozesse dar. Die Hauptelemente der Knotenstrukturschicht 4 sind Knoten 101, zu denen Bauelementeknoten und Prozessknoten gehören. Bauelementeknoten sind Abstraktionen der konkreten Artikel, die in dem Produkt verwendet werden. Zum Beispiel kann ein Automobil einen separaten Bauelementeknoten für "Motor", nicht aber für eine bestimmte Art von Motor aufweisen. Stattdessen werden die tatsächlichen Artikel, die zur Herstellung des Produkts verwendet werden, durch Bauelementevarianten angegeben, die den Bauelementeknoten zugeordnet sind. Bauelementevarianten werden nachfolgend ausführlicher im Kontext der Variantenschicht 5 besprochen. Prozessknoten sind mit Bauelementeknoten verbunden und sind Abstraktionen der tatsächlichen Schritte, die zur Handhabung des Bauelements im Produktionsprozess verwendet werden. Zum Beispiel kann das Bauelement "Tür" einen separaten Prozessknoten für "Türmontage", nicht aber für die Montage einer bestimmten Art von Tür aufweisen, die andere Produktionsschritte erfordern kann. Stattdessen werden die tatsächlichen Produktionsschritte, mit denen das Bauelement im Produktionsprozess gehandhabt wird, durch Prozessvarianten angegeben, die Prozessknoten zugeordnet sind. Prozessvarianten werden nachfolgend ausführlicher im Kontext der Variantenschicht besprochen. Die Knotenstrukturschicht 4 besteht aus allen Bauelementeknoten und Prozessknoten für eine bestimmte Produktklasse. Sie weist eine mehrschichtige Struktur zur Darstellung von Bauelementen, ihren untergeordneten Bauelementen und verwandten Prozessen auf.

Die unterste Schicht der Produktvariantenstruktur 1 ist die Variantenschicht 5, die aus Varianten 102 besteht, die mit Knoten 101 zusammenhängen, darunter Bauelementevarianten, die mit Bauelementeknoten zusammenhängen, und Prozessvarianten, die mit Prozessknoten zusammenhängen. Bauelementevarianten sind konkrete Artikel, die als Teil des Endprodukts verwendet werden. Wenn ein bestimmtes Produkt gebaut wird, wird der Bauelementeknoten durch eine seiner verwandten Bauelementevarianten ersetzt. Da mehr als eine Bauelementevariante mit einem Bauelementeknoten verwandt sein kann, besteht eine Auswahlbedingung, die jedem Bauelementeknoten zugeordnet ist, die die Produktkenngröße angibt, für die jede Bauelementevariante verwendet wird. Bei einem gegebenen bestimmten Produkt mit spezifischen Kenngrößen oder einer Produktvariante kann die Variantenschicht dementsprechend dessen Materialliste liefern. Die Materialliste für eine bestimmte Produktvariante kann durch Angabe der gewünschten Produktvariante durch die Benutzerschnittstelle des computergestützten Systems gewonnen werden, woraufhin der Zentralprozessor die Auswahlbedingungen anwendet, um die Materialliste für die spezifizierte Produktvariante zu bestimmen und die spezifischen Bauelementevarianten anzuzeigen, die in der Produktvariante verwendet werden.

FIG.6 zeigt die Schritte des Empfangens der Auswahl einer Produktvariante aus der Benutzerschnittstelle 30, die Verwendung der den Bauelementeknoten 31 zugeordneten Auswahlbedingungen und die Anzeige der Materialliste auf einer Sichtanzeige 32. Der Zentralprozessor kann außerdem die spezifischen Prozessvarianten oder alle tatsächlichen Produktionsschritte, die bei der Herstellung der angegebenen Produktvariante verwendet werden, auf einer Sichtanzeige anzeigen. Prozessvarianten stellen konkrete Operationen dar, die in dem Produktionsprozess für konkrete Bauelementevarianten verwendet werden. Prozessvarianten hängen mit Prozessknoten zusammen und werden durch eine Auswahlbedingung auf der Grundlage der gewünschten Produktvariante (und damit der bestimmten Bauelementevariante) ausgewählt. Dementsprechend kann die Variantenschicht bei einem gegebenen bestimmten Produkt mit spezifischen Bauelementevarianten dessen konkreten Weg durch die tatsächlichen Produktionsschritte liefern.

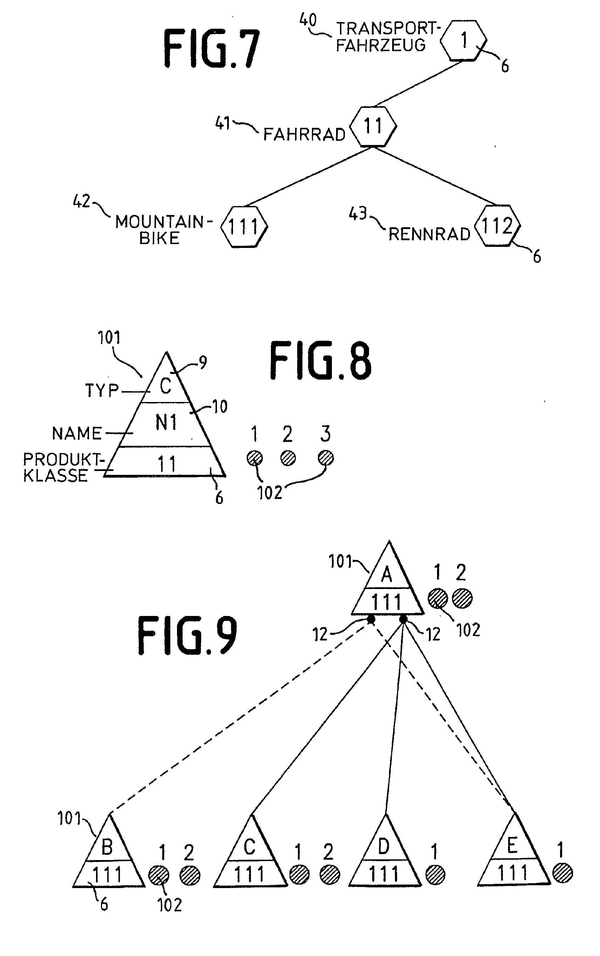

Bauelementevarianten werden ausgewählt und Endprodukte produziert, indem Kenngrößen einer bestimmten Produktklasse angegeben werden.
Wie in FIG.7 gezeigt, werden Produktklassen 6 hierarchisch dargestellt und bestehen aus "produzierbaren" und "nichtproduzierbaren" Kategorien. Zum Beispiel sind "Transportfahrzeug" 40 und "Fahrrad" 41 nichtproduzierbare Produktklassen, die nur zur Strukturierung verwendet werden, während "Mountain-Bike" 42 und "Rennrad" 43 produzierbare Produktklassen sind. Sowohl die produzierbaren als auch die nichtproduzierbaren Klassen und ihre zugeordneten Knoten und Varianten werden in der Anwendungsansichtsschicht 3 näher betrachtet.

Bauelementeknoten und Prozessknoten sind die Hauptelemente der Produktvariantenstruktur 1 des computergestützten Systems. Der Bauelementeknoten 101 "Motor" in einem Automobil kann den konkreten Artikel "2,4-Liter, 6-Zyl." als eine seiner zugeordneten Bauelementevarianten aufweisen.

Wie in FIG.8 gezeigt, wird ein Knoten 101 als ein Dreieck mit einem Buchstaben abgebildet, der seinen Typ 9 (zum Beispiel "C" für Bauelementeknoten und "P" für Prozessknoten) kennzeichnet. Ein Symbol 10 stellt den Namen des Bauelements oder des Prozesses dar, eine Zahl beschreibt seine betreffende Produktklasse 6 und Punkte stehen für die Varianten 102, die diesem Knoten 101 zugeordnet sind. Da Bauelementeknoten mit mehr als einer Produktklasse 6 zusammenhängen können, unterscheidet eine Variantendifferenzierungsfunktion Attribute von Bauelementevarianten wie zum Beispiel die Menge einer spezifischen Bauelementevariante oder den Auswahlzustand gemäß der Produktklasse 6.

Die Knoten 101 stehen auf drei Arten miteinander in Beziehung. Zum Beispiel ist in einem Automobil der Bauelementeknoten "Rad" mit den Bauelementeknoten "Felge" und "Reifen" verbunden. Dies wird als eine Knotenbeziehung des "Zerlegungstyps" bezeichnet. Ein Prozessknoten kann ebenfalls in mehrere Prozessknoten zerlegt werden, so dass die Knotenbeziehung der Zerlegungsart von der Art "C-C" oder "P-P" sein kann. Die "Verbindungsbeziehung" stellt den Produktionsprozessfluss zwischen Bauelementeknoten und Prozessknoten her. Da Prozesse außerdem ohne zwischengeschaltetes Bauelement aneinander angeschlossen sein können, kann die Verbindungsbeziehung von der Art "C-P", "P-C" und "P-P" sein.

Wie in FIG.2 und 3 gezeigt, sind die Knoten 101 außerdem mit einer Anwendungsansicht verbunden, die die Verbindung zwischen der Produktschicht und der Knotenstrukturschicht 4 der Produktvariantenstruktur 1 herstellt. Dies ist als eine Ansicht-Knotenbeziehung bekannt.

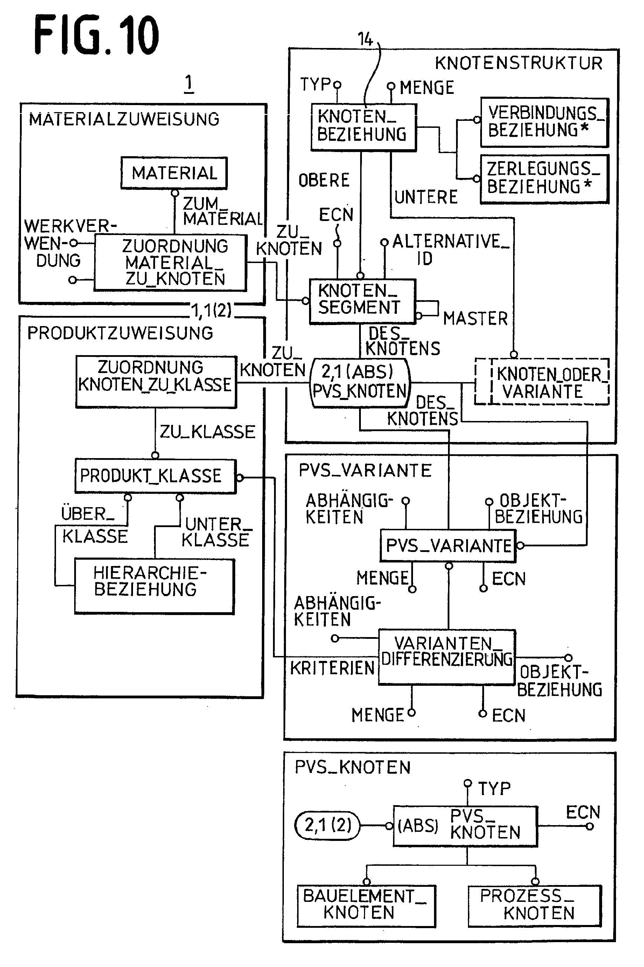

FIG.9 zeigt, wie ein Bauelementeknoten 101 in der Knotenstrukturschicht mehr als eine Zerlegung in untergeordnete Bauelemente aufweisen kann. Die Auswahl zwischen verschiedenen Zerlegungen hängt von verschiedenen Kriterien ab, z. B. dem Werk, in welchem das Produkt hergestellt wird. Für jede alternative Zerlegung eines Bauelements in untergeordnete Bauelemente werden verschiedene Knotensegmente 12 bereitgestellt. FIG.10 zeigt eine Zusammenfassung der Produktvariantenstruktur 1 in einem Datenmodell 14 mit Instanzen gemäß EXPRESS-G (ISO 10303-11).

Obwohl wesentliche neuartige Merkmale der Erfindung in den Ausführungsbeispielen gezeigt, beschrieben und herausgestellt wurden, umfasst die Erfindung auch solche nicht dargestellten Ausführungsformen, in welchen Fachleute verschiedene Auslassungen und Ersetzungen und Veränderungen der Form und Einzelheiten der hier beschriebenen Erfindung vornehmen können, ohne von dem Gedanken der Erfindung abzuweichen. Es ist ausdrücklich beabsichtigt, dass alle Kombinationen dieser Artikel und/oder Verfahrensschritte, die im wesentlichen dieselbe Funktion auf im wesentlichen dieselbe Art und Weise zur Erzielung derselben Ergebnisse durchführen, im Schutzbereich der Erfindung liegen. Es ist deshalb beabsichtigt, dass eine Einschränkung nur wie durch den Schutzbereich der angefügten Ansprüche angezeigt erfolgen soll.

## Patentansprüche

1. Verfahren zur Darstellung eines Produkts und dessen Handhabung in einem Produktionsprozess, wobei das Produkt eine Mehrzahl an Produktvarianten umfasst und das Verfahren die folgenden Schritte umfasst:
Bereitstellen einer Mehrzahl von Bauelementeknoten, wobei jeder Bauelementeknoten die Abstraktion eines konkreten Artikels ist, der im Produkt verwendet wird;
Zuordnen wenigstens einer Bauelementevariante zu jedem Bauelementeknoten, wobei jede Bauelementevariante einen tatsächlichen Artikel angibt, der zur Herstellung einer Produktvariante des Produkts verwendet werden kann, so dass in dem Produkt für jeden Bauelementeknoten nur eine dem Bauelementeknoten zugeordnete Bauelementevariante ausgewählt werden kann;
Verbinden einer Mehrzahl von Bauelementeknoten (105, 106) mittels Prozessknoten (104); und
Zuordnen wenigstens einer Prozessvariante zu jedem Prozessknoten, wobei die Prozessvariante den tatsächlichen Produktionsschritt angibt, mit dem die durch einen Prozessknoten (104) verbundenen Bauelementeknoten (105, 106) im Produktionsprozess gehandhabt werden.

2. Verfahren nach Anspruch 1, welches die weiteren Schritte umfasst:
Zuordnen von wenigstens einer Auswahlbedingung zu jedem Bauelementeknoten, wobei jede Auswahlbedingung Produktkenngrößen angibt, für die eine bestimmte Bauelementevariante verwendet wird;
Bestimmen einer Materialliste für eine spezifizierte Produktvariante durch ermitteln (31) der in der spezifizierten Produktvariante benötigten Bauelementevarianten mittels Anwenden der Auswahlbedingungen für jeden Bauelementeknoten.

3. Computergestütztes System zur Darstellung eines Produkts und dessen Handhabung in einem Produktionsprozess, wobei das Produkt eine Mehrzahl an Produktvarianten umfasst und das computergestützte System die folgend Mittel umfasst:
Mittel zum Bereitstellen einer Mehrzahl von Bauelementeknoten, wobei jeder Bauelementeknoten die Abstraktion eines konkreten Artikels ist, der im Produkt verwendet wird;
Mittel zum Zuordnen wenigstens einer Bauelementevariante zu jedem Bauelementeknoten, wobei jede Bauelementevariante einen tatsächlichen Artikel angibt, der zur Herstellung einer Produktvariante des Produkts verwendet werden kann, so dass in dem Produkt für jeden Bauelementeknoten nur eine dem Bauelementeknoten zugeordnete Bauelementevariante ausgewählt werden kann;
Mittel zum Verbinden einer Mehrzahl von Bauelementeknoten (105, 106) mittels Prozessknoten (104); und
Mittel zum Zuordnen wenigstens einer Prozessvariante zu jedem Prozessknoten, wobei die Prozessvariante den tatsächlichen Produktionsschritt angibt, mit dem die durch einen Prozessknoten (104) verbundenen Bauelementeknoten (105, 106) im Produktionsprozess gehandhabt werden.

4. Computergestütztes System nach Anspruch 3, welches die weiteren Mittel umfasst:
Mittel zum Zuordnen von wenigstens einer Auswahlbedingung zu jedem Bauelementeknoten, wobei jede Auswahlbedingung Produktkenngrößen angibt, für die eine bestimmte Bauelementevariante verwendet wird;
Mittel zum Bestimmen einer Materialliste für eine spezifizierte Produktvariante durch ermitteln (31) der in der spezifizierten Produktvariante benötigten Bauelementevarianten mittels Anwenden der Auswahlbedingungen für jeden Bauelementeknoten.

5. Computergestütztes System zur Darstellung eines Produkts und dessen Handhabung in einem Produktionsprozess, wobei das Produkt eine Mehrzahl an Produktvarianten beinhaltet und das computergestützte System umfasst:
einen Speicher, der eine Datenstruktur speichert, wobei die Datenstruktur folgende Daten bereitstellt:
a) eine Mehrzahl von Bauelementeknoten, wobei jeder Bauelementeknoten eine Abstraktion eines konkreten Artikels ist, der im Produkt verwendet wird;
b) Eine Mehrzahl von Bauelementevarianten, wobei jede Bauelementevariante einen tatsächlichen Artikel angibt, der zur Herstellung einer Produktvariante des Produkts verwendet werden kann, so dass in dem Produkt für jeden Bauelementeknoten nur eine dem Bauelementeknoten zugeordnete Bauelementevariante ausgewählt werden kann;
c) eine Mehrzahl von Prozessknoten, wobei jeder Prozessknoten eine Abstraktion eines tatsächlichen Schritts darstellt, welcher zur Handhabung des Bauelements im Produktionsprozess verwendet wird;
d) eine Mehrzahl von Prozessvarianten, wobei jede Prozessvariante einen tatsächlichen Produktionsschritt angibt, mit dem durch einen Prozessknoten (104) verbundene Bauelementeknoten (105, 106) im Produktionsprozess gehandhabt werden; und
einen Zentralprozessor zur Ausführung folgender Schritte:
a) Zuordnen wenigstens einer Bauelementevariante zu jedem Bauelementeknoten;
b) Verbinden einer Mehrzahl von Bauelementeknoten (105, 106) mittels Prozessknoten (104); und
c)Zuordnen wenigstens einer Prozessvariante zu jedem Prozessknoten.

6. Computergestütztes System nach Anspruch 5, in dem
die Datenstruktur weiterhin eine Mehrzahl von Auswahlzuständen bereitstellt, wobei jeder Auswahlzustand, eine bestimmte Bauelementevariante angibt, die für eine bestimmte Produktvariante gemäß Produktkenngrößen der bestimmten Produktvariante verwendet werden soll; und
der Zentralprozessor eine Materialliste für die bestimmte Produktvariante bestimmt, wobei die Materialliste die Bauelementevarianten beinhaltet, die mittels der Auswahlzustände für die bestimmte Produktvariante vom Zentralprozessor ermittelt (31) werden.
